# EUROPEAN PATENT SPECIFICATION

(11) **EP 1 041 886 B1**
(45) Date of publication and mention of the grant of the patent: **25.06.2003**
(21) Application number: 98966268.9
(22) Date of filing: 09.12.1998
(51) Int. Cl.: A01N 59/00

(54) **METHOD AND COMPOSITION FOR COMBATTING INSECTS AND VIRUSES TRANSMITTED TO PLANTS THEREBY**
VERFAHREN UND ZUSAMMENSETZUNG ZUR BEKÄMPFUNG VON INSEKTEN UND DURCH SIE AUF PFLANZEN ÜBERTRAGENE VIREN
PROCEDE ET COMPOSITION POUR LUTTER CONTRE LES INSECTES ET LES VIRUS QU'ILS TRANSMETTENT AUX PLANTES

(30) Priority: 17.12.1997 EP 97122216
(43) Date of publication of application: 11.10.2000
(73) Proprietor: MERCK PATENT GmbH, 64293 Darmstadt (DE); Limerick Ltd, Tel Aviv 64256 (IL)
(72) Inventor: SANDER, Ronen, 69270 Tel Aviv (IL)
(74) Representative: Raabe, Siegfried
(86) International application number: EP9808004
(87) International publication number: WO99030563

(56) References cited:
- EP-A- 0 255 566
- DE-A- 3 922 178
- GB-A- 2 098 247
- PATENT ABSTRACTS OF JAPAN vol. 009, no. 309 (C-318), 5 December 1985 & JP 60 149508 A (TOMONO NOUYAKU KK), 7 August 1985
- DATABASE WPI Section Ch, Week 9702 Derwent Publications Ltd., London, GB; Class C07, AN 97-014682 XP002100667 & JP 08 280210 A (NISSAN CHEM IND LTD) , 29 October 1996 cited in the application
- PATENT ABSTRACTS OF JAPAN vol. 016, no. 437 (C-0984), 11 September 1992 & JP 04 152833 A (TOUKIYOU INKI KK;OTHERS: 01), 26 May 1992
- DATABASE CROPU DERWENT INFORMATION LTD / STN-International STN-accession no. 92-82810, J.B. KRING & D.J. SCHUSTER: "Management of Insects on Pepper and Tomato with UV-Reflective Mulches" XP002100666 & FLA. ENTOMOL., vol. 75, no. 1, 1992, pages 119-29,

## Description

The present invention relates to a method and composition for combatting insects and insect-transmitted plant viruses by repelling insects from the plants.

It is a continuing objective of persons engaged in agriculture, to increase yields of crops such as vegetables, especially by combatting plant pests such as plant viruses introduced by insects. Use of insecticides by no means provides a complete answer to this problem, due to the known phenomenon of increasing insect resistance to insecticides.

An article by Smith, F.F. and Webb, R.E., entitled "Repelling Aphids by Reflective Surfaces ..." at pages 631-639 of "Viruses, Vectors and Vegetation" (Karl Maramorosch, ed.), Interscience Publishers, 1969, reviews earlier work describing the reaction aphids to different colors, and in particular the finding that aphids are attracted to yellow or modified yellow objects (such as a yellow pan), but are influenced also by the nature or color background of the background surrounding the yellow, e.g. unpainted aluminum pans surrounding yellow pans repels the aphids. The review also mentioned as a known fact, that sprayed foliage, especially that having a whitish residue, attracts aphids to land. The authors of this review then reported the results of their own experiments, in which it was found that foliage sprays of aluminum repelled as many aphids as aluminum sheets. The aluminum sprays, however, suffered from a number of disadvantages, namely, either the spray deposits adhered to plant for only 2-3 days and thereafter lost their effectiveness, or on rough hairy plants (such as cucumber, canteloupe or tobacco) the sprays left a dull gray deposit which did not repel aphids. More persistent aluminum sprays containing adhesive were found to stunt growth of foliage. Using aluminum sheets as mulches, in experiments with bush squashes, the authors found that maximum aphid repellency was obtained when 50% of the ground was thus covered, and that much higher yields were obtained than when using parathion spray, or in a control experiment. It was further reported that aluminium sheet material was not successful in repelling aphids from all plant species.

JP 04-190733 discloses a multi-film for repelling harmful insects and accelerating growth of vegetation, prepared from a composition containing thermoplastic resin, metal aluminium powder and mica, and optionally, e.g. antioxidants, and antistatic and UV absorbing agents.

JP 04-152833 discloses a similar product for reducing the effect of harmful insects on agricultural products, but in which (in particular) the mica of the previous composition is replaced by mica that is TiO₂-coated as pearl pigment.

JP 60-149 508 discloses a method for preventing the damage by thrips by spraying a white fine powder of mineral mixed with a fixing agent onto the plants. The white fine powder of mineral includes calcium carbonate, clay, kaoline, zieklite, china clay, talc, titanium white, zinc oxide, lithopone, chalk and slaked lime. Please note page 4, last paragraph of the English translation. Pearl luster pigments are not mentioned.

JP 08-280 210 describes cruciferae crop seeds which are coated with a synthetic pyrethroid for killing main vermin whereupon an increase in the yield of rhizome can be achieved. The coating contains besides the pyrethroid a surface-active agent and/or an inorganic adjuvant. The inorganic adjuvant is used as surface reforming agent, masking agent, protective wall agent, pelletting agent, etc,

As specific example Iriodin® (mica coated with titanium dioxide) is mentioned. The adjuvant prevents "stickiness" caused by oily substances and results in a "smooth feel" of the surface of the seeds.

DE 39 22 178 discloses deagglomerated and readily dispersible platelet-shaped substrates with a high degree of softness containing 0.5-20 % by weight of spherical particles having a small diameter in comparison with the platelet-shaped substrate. The spherical particles are effective like a ball bearing between the platelets and generate the soft feeling of the product on the skin. The product is produced by suspending of a platelet-like substrate, for example a pearl luster pigment, in water, 1-butanol or ethylene glycol and mixing the suspension with a suspension of spherical particles and drying the mixture. The product is used in cosmetic formulations.

GB 2 098 247 discloses a net for protecting growing crops, at least one surface of which is provided with a metallised reflective coating. The net is placed over the growing crops.

EP 0 255 566 describes an insect-repelling film or sheet containing specific inorganic compounds which reflects ultraviolet light having a specific wavelength. The inorganic compounds are titanium and zirconium compounds, especially aluminium silicate titanate.

Thus, the tendency of the prior art known to the Applicant, so far as repelling insects by use of reflective materials is concerned, is to utilize sheet material which is either itself reflective as in the case of the aluminium sheet mulches described in the Smith and Webb articles, or which is apparently reflective by virtue of including reflective particles as in the case of the above-mentioned published Japanese patent applications.

However, these sheet materials suffer from two important disadvantages. Firstly, they tend to heat the microenvironment of the plants they are intended to protect, so that in warm climates the plants could be damaged or even destroyed by intense heat thus induced by these sheets. Secondly, these sheets are expensive, of the order of US $500 per 0.1 hectare.

Marco, S. in Phytopathology, 76: 1344-1348 (1986) reported the results of experiments in which potato crops were sprayed weekly with whitewashes. It was found that the potato leaf roll virus was reduced by 0-61 % and the potato virus Y by 0-68 %; and also that a number of aphid species were repelled by whitewash while one species was attracted (as determined by comparing the number of aphids attracted to sprayed traps and control traps). However, the use of whitewashes suffers from serious disadvantages, namely: the repellent effect on insects is not powerful enough; increasing the concentration in the spray could harm the plants; and the sprayed crops would require special treatment to remove the whitewash from the fruit or vegetables in question. Whitewashes are in fact hardly used by farmers at all for crop protection, except for painting the bark of trees.

It has been surprisingly found in accordance with the present invention, that insects can be effectively repelled from growing plants in a manner which is considerably more economic than the prevalent method of using reflective mulching sheets, which avoids damage to or destruction of plants caused by use of such sheets in warm climates, and which avoids the above-noted disadvantage of whitewashes.

The present invention accordingly provides a method for protecting growing plants from insects and from insect-transmitted plant viruses, which comprises applying to a locus or loci selected from surfaces of growing plants and their background, a composition consisting of a spray, a dusting powder, an aqueous suspension or dispersion containing at least one pearl luster pigment, whereby said composition is effective to repel said insects and thus protect the plants.

In another aspect, the invention provides a composition for protecting growing plants from insects and from insect-transmitted plant viruses, which consists of a spray or an aqueous suspension or dispersion containing at least one pearl luster pigment and at least one agriculturally acceptable diluent, carrier or adjuvant and at least one surfactive agent or adhesive.

In a further aspect, the invention provides a composition for protecting growing plants from insects and from insect-transmitted plant viruses, which consists of a dusting powder containing at least one pearl luster pigment and at least one agriculturally acceptable carrier or adjuvant.

Preferred embodiments of the invention are defined in the subclaims.

The present invention provides a means for avoiding, at least to a large extent, the damaging effect on growing plants of destructive insects and insect-transmitted plant viruses. The method of the invention also reduces the temperature of the microenvironment of the plants, which can be of great importance in warm climates, e.g., leaf bums in zucchini are avoided, and the quality and sweetness of melons are improved. Additionally, the method of the invention exhibits wavelength-dependent reflection of the infrared region.

The means of applying a composition comprising reflective particles to the surfaces of growing plants and/or their background in accordance with the invention may be done by any means known in the art. Spraying is presently preferred, but it does not exclude, e.g., the use of powders for dusting plants.

As will be apparent from the preceding paragraph, the compositions of the invention, which may be used in the method of the invention, are essentially admixtures which may take any form known per se in the art, e.g. they may be in the form of suspensions or dispersions for applying by means of a spray, or they may take the form of dusting powders. In any event, they may contain agriculturally acceptable conventional hydrophilic or lipophilic diluents, carriers or adjuvants. Examples for diluents are mineral oil, vegetable oil or water. For example, aqueous suspensions or dispersions may contain surface-active agents and/or adhesives for attaching the reflective particles to plants. Dusting powders may contain, e.g. solid carriers or diluents such as chalk or diatomaceous earth.

As the pearl luster pigment (or powders or platelets) which may be utilized in the practice of the method of the invention, there may be used, e.g., sheet silicates like talk, kaolin, sericit or mica, glass platelets, SiO₂ flakes, ceramic flakes, TiO₂ flakes, lithopones, platelet-shaped barium sulfate, platelet-shaped alumina or micaceous iron oxide, particularly when coated with one or more layers of earth metal carbonates, earth metal sulfates or metal oxides like TiO₂, Fe₂O₃, SnO, SiO₂, Al₂O₃, ZnO, ZrO and mixtures thereof. Coated mica platelets are for example marketed under the Registered Trade Marks "Iriodin" (Merck KGaA, Darmstadt, Germany) and "Mearlin" or "MagnaPearl" (The Mearl Corporation, New York, U.S.A.), for use as pearl luster pigments. Especially preferred are mica platelets coated with TiO₂ and/or Fe₂O₃.

A particular non-limiting example of the Mearlin range of coated mica platelets, found to be useful in the present invention, is Mearlin Card Silver BN001, which contains generally 64-67 % mica, 22-31 % TiO₂, 2-4 % graphite ("Graphitan 6154") and 0.1-0.5 % SnO₂; the usefulness of this product in the practice of the invention does not of course preclude the use of TiO₂-coated mica wherein the coating contains different amounts of graphite and SnO₂, of which contains only one or neither of these ingredients, or which contains other minor ingredients. A further example of the reflective particles, powders or platelets which may be utilized in the practice of the invention, is constituted by BiOCl crystals marketed under the Registered Trade Mark "Mearlite" (The Mearl Corporation).

A person of the art will of course appreciate that in accordance with the invention, the active insect-repellent substances are selected for their light-reflective, pearlescent or glitter properties, and thus the actual chemical composition of the particles is a secondary consideration, except that since the present invention is principally concerned with treating crops intended for human consumption it will of course be highly desirable that the active insect-repellent substances be non-toxic. A person of the art will also be aware that where such reflective particles, powders or platelets are supplied by the manufacturer in a vehicle for use as pigments, such vehicles could make these products unsuitable for agricultural applications, where predominantly aqueous vehicles would normally be used. In other words, the active insect-repellent substances should normally be initially in solvent-free form and will then be introduced for utilitarian purposes into an aqueous medium; this general principle does not of course exclude the possibility of utilizing such a commercially available substance in a vehicle suitable for agricultural application, provided that toxic substances are absent therefrom.

Without prejudice to the generality of the invention, it is presently believed that the method of the invention will be especially applicable to repelling aphids, leafhoppers, Lariomyza Bryoniae, white flies and thrips, from growing plants, thus protecting them from these insects as well as from plant viruses transmitted by these insects.

The invention will now be illustrated by the following examples.

### Example 1

Six yellow plates (20 x 40 cm) were placed in a row at a distance of 15 meters from the edge of and along one side of a cotton field, and six such yellow plates were placed similarly in a second row, but at a distance of 25 meters from the edge of a field. The plates were sprayed (two from each row) with, respectively, 1% aqueous suspensions (containing 0.1% Shatach 90" surface active agent) of mica coated with titanium dioxide (M.T.O.) and mica coated with titanium oxide and graphite (BN001 as described above), the plates having been sanded previously to improve distribution of the spray (which was not however distributed uniformly). Two control plates from each row were not sprayed. Each such spraying was followed by spraying with a transparent glue "Rimiput" for adhering leaf-hoppers landing on the plates. The experiment was commenced in the evening of day 1 and the plates were collected in the afternoon of day 5, the number of leaf-hoppers on each plate being as follows:

| Run No. | Control | M.T.O. | BN001 |
|---|---|---|---|
| 1 | 446 | 34 | 33 |
| 2 | 598 | 45 | 28 |
| 3 | 408 | 45 | 21 |
| 4 | 534 | 40 | 35 |
| Mean | 496.5 | 41 | 29.9 |
| Standard Deviation | 74.32 | 4.53 | 5.4 |

Summary of Results. M.T.O. and BN001 were, 91.73 and 94% effective, respectively, in reducing the no. of captured leaf-hoppers, compared with control, while the BN001 reduced the no. of captured leaf-hoppers by 28.56%, compared with M.T.O.

### Example 2

Twenty yellow plates (20 x 20 cm) were placed at random in a melon field, and were sprayed in batches of five with, respectively, 1% aqueous suspensions (containing 0.1% Shatach 90" surface active agent) of uncoated mica (M), mica coated with titanium oxide (M.T.O.) and mica coated with titanium oxide and graphite (BN001), the plates having been sanded previously to improve distribution of the spray (which was not however distributed uniformly). Five control plates were not sprayed. Each such spraying was followed by spraying with a transparent glue as in Example 1. After four days the number of white flies and leaf-hoppers on each plate was as follows:
(a) White flies: Effect of spraying on the number of white flies collected:

| Run No. | Control | M | M.T.O. | BN001 |
|---|---|---|---|---|
| 1 | 432 | 368 | 344 | 124 |
| 2 | 469 | 421 | 132 | 321 |
| 3 | 500 | 370 | 217 | 256 |
| 4 | 493 | 437 | 203 | 280 |
| 5 | 535 | 375 | 278 | 132 |
| Mean | 485.8 | 394.2 | 234.8 | 176.4 |
| Standard Deviation | 34.2 | 28.95 | 71.68 | 108.89 |

Summary of Results. M.T.O. and BN001 were approximately 50-60% effective in reducing the incidence of captured white flies, whereas M also reduced the incidence of captured white flies but by <20%.
(b) Leaf hoppers: Effect of spraying on the number of leaf hoppers collected:

| Run No. | Control | M | M.T.O. | BN001 |
|---|---|---|---|---|
| 1 | 39 | 97 | 6 | 5 |
| 2 | 69 | 48 | 5 | 10 |
| 3 | 55 | 28 | 3 | 2 |
| 4 | 92 | 83 | 15 | 2 |
| 5 | 77 | 43 | 3 | 5 |
| Mean | 66.4 | 56.8 | 6.4 | 4.8 |
| Standard Deviation | 18.19 | 25.9 | 4.5 | 2.9 |

Summary of Results. M.T.O. and BN001 were ≈90% effective in reducing the incidence of captured leaf-hoppers; M also showed a (non-statistical) tendency to reduce the incidence of captured leaf-hoppers.

### Example 3.

Plywood boar 50x50 cm was painted with a green shade with the same color as mature squash leaves. This color was selected to represent the attraction of insects to plants. Two additional controls were added: Yellow, that attracts many vector species (aphids, white flies, many leafhoppers etc.), and brown that represents poor attraction similar to that of bare ground. Green boards also served as background colors on which each of the pigments were applied. Five boards for each color were exposed on bare ground near a cotton field and some wild vegetation in the vicinity of Kibbutz Nachshon, in the internal central coastal plain ca. 30 km South of Tel Aviv and 40 km North West of Jerusalem. The boards were arranged randomly in the plot, at a distance of 7 m between each board. The pigments were applied to this board by spraying. On each board, once a week, were placed two A4 transparencies to which sticky tanglefoot were applied. These transparencies were removed for counting, and a new set was placed instead. Exposure was made on the 21st and 28th of August and on the 4th, 11th, and 25th of September. The experimental design responds well for monitoring insects, based on the positive trappings on yellow and negative trappings on brown colors (see attached Table).

While particular embodiments of the invention have been described above, the skilled person will be aware that many variation and modifications may be made. The present invention includes all such variations and modifications which lie within the spirit, scope or concept of the present invention, and which would be apparent to the skilled addressee, on reading the present disclosure and the claims which follow.

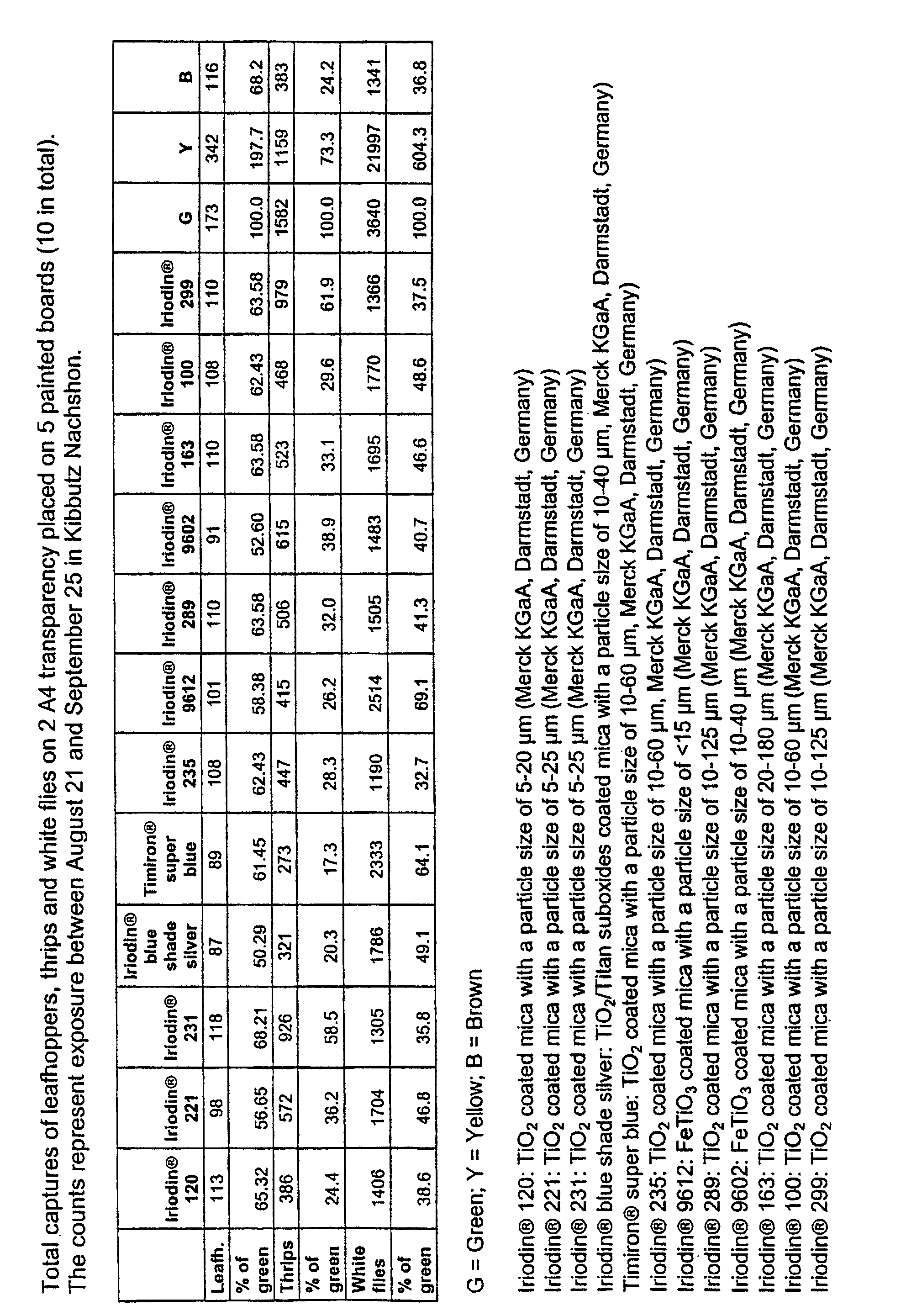

## Claims

1. A method for protecting growing plants from insects and from insect-transmitted plant viruses, which comprises applying to a locus or loci selected from surfaces of growing plants and their background, a composition consisting of a spray, a dusting powder, an aqueous suspension or dispersion containing at least one pearl luster pigment, whereby said composition is effective to repel said insects and thus protect the plants.

2. Method according to claim 1, wherein said aqueous suspension or dispersion comprises additionally at least one surface active agent or adhesive.

3. Method according to claim 1, wherein said pearl luster pigment is selected from the group consisting of mica coated with TiO₂, mica coated with Fe₂O₃, mica coated with both TiO₂ and Fe₂O₃, mica coated with both TiO₂ and graphite, and BiOCl.

4. Method according to claim 3, wherein said mica coated with TiO₂ also contains in the coating at least one of graphite and SnO₂.

5. Method according to claim 1, wherein said insects are selected from aphids, leafhoppers, Lariomyza Bryoniae, white flies and thrips.

6. A composition for protecting growing plants from insects and from insect-transmitted plant viruses, which consists of a spray or an aqueous suspension or dispersion containing at least one pearl luster pigment and at least one agriculturally acceptable diluent, carrier or adjuvant and at least one surfactive agent or adhesive.

7. A composition for protecting growing plants from insects and from insect-transmitted plant viruses, which consists of a dusting powder containing at least one pearl luster pigment and at least one agriculturally acceptable carrier or adjuvant.

8. A composition according to claims 6 and 7, wherein said pearl luster pigment is selected from the group consisting of mica coated with TiO₂, mica coated with Fe₂O₃, mica coated with both TiO₂ and Fe₂O₃, mica coated with both TiO₂ and graphite, and BiOCl.

9. A composition according to claim 8, wherein said mica coated with TiO₂ also contains in the coating at least one of graphite and SnO₂.

## Patentansprüche

1. Verfahren zum Schutz wachsender Pflanzen gegen Insekten und gegen durch Insekten übertragene Pflanzenviren, **dadurch gekennzeichnet, daß** man auf einen Ort bzw. auf Orte ausgewählter Oberflächen wachsender Pflanzen und ihre Umgebung eine Zusammensetzung bestehend aus einem Spray, einem staubenden Pulver, einer wäßrigen Suspension oder Dispersion mit mindestens einem Perlglanzpigment aufbringt, wobei diese Zusammensetzung auf die Insekten als Repellant wirkt und so die Pflanzen schützt.

2. Verfahren nach Anspruch 1, wobei die wäßrige Suspension oder Dispersion zusätzlich mindestens eine oberflächenaktive Substanz oder ein Klebemittel enthält.

3. Verfahren nach Anspruch 1, wobei das Perlglanzpigment aus der Gruppe TiO₂-beschichteter Glimmer, Fe₂O₃-beschichteter Glimmer, TiO₂- und Fe₂O₃beschichteter Glimmer, TiO₂- und Graphitbeschichteter Glimmer sowie BiOCl stammt.

4. Verfahren nach Anspruch 3, wobei der TiO₂beschichtete Glimmer weiterhin in der Beschichtung zumindest einen Bestandteil aus der Gruppe Graphit und SnO₂ enthält.

5. Verfahren nach Anspruch 1, wobei die Insekten aus der Gruppe der Blattläuse, Zikaden, Lariomyza bryoniae, Weißen Fliegen sowie Thrips stammen.

6. Zusammensetzung zum Schutz wachsender Pflanzen gegen Insekten und gegen durch Insekten übertragene Pflanzenviren, die aus einem Spray oder einer wäßrigen Suspension oder Dispersion mit mindestens einem Perlglanzpigment und mindestens einem landwirtschaftlich unbedenklichen Verdünnungsmittel, Träger oder Hilfsmittel sowie mindestens einer oberflächenaktiven Substanz oder einem Klebemittel besteht.

7. Zusammensetzung zum Schutz wachsender Pflanzen gegen Insekten und gegen durch Insekten übertragene Pflanzenviren, die aus einem staubenden Pulver mit mindestens einem Perlglanzpigment sowie mindestens einem landwirtschaftlich unbedenklichen Träger oder Hilfsmittel besteht.

8. Zusammensetzung nach Ansprüchen 6 und 7, wobei das Perlglanzpigment aus der Gruppe TiO₂-beschichteter Glimmer, Fe₂O₃-beschichteter Glimmer, TiO₂- und Fe₂O₃-beschichteter Glimmer, TiO₂- und Graphitbeschichteter Glimmer sowie BiOCl stammt.

9. Zusammensetzung nach Anspruch 8, wobei der TiO₂beschichtete Glimmer weiterhin in der Beschichtung zumindest einen Bestandteil aus der Gruppe Graphit und SnO₂ enthält.

## Revendications

1. Procédé pour protéger les plantes en croissance contre les insectes et les virus des plantes transmis par les insectes, comprenant le fait d'appliquer sur un site ou sur des sites sélectionnés à partir des surfaces des plantes en croissance et de leur environnement, une composition constituée d'un spray, d'une poudre pulvérulente, d'une suspension ou d'une dispersion aqueuse contenant au moins un pigment lustrant perlant, grâce à quoi ladite composition est efficace pour repousser lesdits insectes et ainsi protéger les plantes.

2. Procédé selon la revendication 1, dans lequel ladite suspension ou dispersion aqueuse comprend en plus au moins un agent tensioactif ou un adhésif.

3. Procédé selon la revendication 1, dans lequel ledit pigment lustrant perlant est sélectionné à partir du groupe constitué du mica enduit de TiO₂, du mica enduit de Fe₂O₃, du mica enduit à la fois avec du TiO₂ et du Fe₂O₃, du mica enduit à la fois avec du TiO₂ et du graphite, et du BiOCl.

4. Procédé selon la revendication 3, dans lequel ledit mica enduit avec du TiO₂ contient également dans l'enduit au moins l'un des deux composants suivants : le graphite et le SnO₂,

5. Procédé selon la revendication 1, dans lequel lesdits insectes sont sélectionnés à partir des aphidiens, des phyllies, des Lariomyza Bryomae, des mouches blanches et des thrips.

6. Composition pour protéger les plantes en croissance contre les insectes et les virus transmis aux plantes par les insectes, qui est constituée d'un spray ou d'une suspension ou d'une dispersion aqueuse contenant au moins un pigment lustrant perlant et au moins un diluant, un matériau formant support ou un adjuvant acceptable d'un point de vue agricole et au moins un agent tensioactif ou un adhésif.

7. Composition pour protéger les plantes en croissance contre les insectes et les virus transmis aux plantes par les insectes, constituée d'une poudre pulvérulente contenant au moins un pigment lustrant perlant et au moins un matériau formant support ou un adjuvant acceptable d'un point de vue agricole.

8. Composition selon les revendications 6 et 7, dans laquelle ledit pigment lustrant perlant est sélectionné à partir du groupe constitué du mica enduit avec du TiO₂, du mica enduit avec du Fe₂O₃, du mica enduit avec à la fois du TiO₂ et du Fe₂O₃, du mica enduit à la fois avec du TiO₂ et du graphite, et du BiOCl.

9. Composition selon la revendication 8, dans laquelle ledit mica enduit avec du TiO₂ contient également dans l'enduit au moins l'un des deux composants suivants : le graphite et le SnO₂.
